# FASCICULE DE BREVET EUROPEEN

(11) **EP 4 028 247 B1**
(45) Date de publication et mention de la délivrance du brevet: **22.07.2026**
(21) Numéro de dépôt: 20775917.6
(22) Date de dépôt: 02.09.2020
(51) Int. Cl.: B29C 70/02, B29C 70/18, B29C 70/34, B29C 70/50, B29C 70/88

(54) **PROCEDE DE FABRICATION D'UNE PIECE COMPOSITE RENFORCEE PAR DES NANOTUBES**
VERFAHREN ZUR HERSTELLUNG EINES MIT NANORÖHREN VERSTÄRKTEN VERBUNDTEILS
PROCESS FOR MANUFACTURING A COMPOSITE PART REINFORCED WITH NANOTUBES

(30) Priorité: 09.09.2019 FR 1909879
(43) Date de publication de la demande: 20.07.2022
(73) Titulaire: SAFRAN AIRCRAFT ENGINES, 75015 Paris (FR)
(72) Inventeur: FROMONTEIL, Didier, 77550 Moissy-cramayel (FR)
(74) Mandataire: Cabinet Camus Lebkiri
(86) Numéro de dépôt international: PCT/FR2020/051522
(87) Numéro de publication internationale: WO 2021/048483

(56) Documents cités:
- WO-A2-2014/011293
- FR-A1- 2 995 815
- US-A1- 2010 170 746
- US-A1- 2015 283 788
- US-A1- 2019 153 876

## Description

### DOMAINE TECHNIQUE DE L'INVENTION

Le domaine technique de l'invention est celui de la fabrication de pièces en matériaux composites renforcées présentant des caractéristiques améliorées de résistance aux impacts.

L'invention présente une application particulièrement intéressante dans le domaine des turbomachines, notamment pour la fabrication de pièces en matériaux composites soumises à des chocs ou impacts, telles que par exemple des aubes de soufflante ou encore des carters.

### ARRIERE PLAN TECHNOLOGIQUE DE L'INVENTION

Classiquement, il est connu que les matériaux composites présentant plusieurs couches de renfort polymérisées ont une certaine faiblesse, sous l'effet d'impacts, dans le sens de l'épaisseur. Les différentes couches de renfort le constituant peuvent alors se séparer par délaminage.

Cette faiblesse des matériaux composites est notamment problématique dans le domaine des turbomachines. En effet, certaines pièces, notamment les aubes de soufflantes en matériaux composites, sont plus exposées aux impacts et peuvent être soumises à des impacts de corps étranger, tel que par exemple un oiseau, de la grêle ou encore des cailloux, conduisant potentiellement à une dégradation de la structure de la pièce composite.

Pour renforcer la cohésion des couches de renfort de la pièce composite, il a été développé des techniques de tissage de fibres de renfort en trois dimensions, décrites notamment dans les demandes de brevets FR2732406 et FR2861143 déposées par la Demanderesse.

Toutefois, cette technique est relativement complexe et coûteuse à mettre en œuvre. Ainsi, pour des questions de rentabilité, certaines pièces en matériaux composites de la turbomachine, qui subissent moins de contraintes, ne sont pas exigibles à cette technologie de mise en œuvre bien que ces pièces peuvent potentiellement être soumises à des impacts, ou chocs, risquant de provoquer par exemple des délaminages.

Pour renforcer la cohésion des différentes couches de renfort d'un panneau en matériaux composites fabriqué à partir de différents plis composites, et donc améliorer la tenue des panneaux au phénomène de délaminage, il a été développé une technique de couture transverse améliorant la cohésion des différentes couches de renfort du matériau composite à fibres de carbone par l'insertion de nanotubes de carbone entre les plis lors de l'empilement des plis.

Cette technique consiste plus particulièrement à positionner une « forêt » de nanotubes de carbone verticaux sur un pli de composite non polymérisé et d'insérer ce pli de composite renforcé en nanotubes entre deux plis de carbone pré-imprégné, jusqu'à l'obtention d'un empilement de 16 plis de carbone pré-imprégné.

Toutefois cette technique nécessite une mise en œuvre complexe pour faire pousser des nanotubes verticalement sur l'ensemble d'un substrat ainsi que pour le positionnement précis des nanotubes sur un pli de pré-imprégné.

Le document US 2015 0283788 décrit un procédé selon le préambule de la revendication 1.

### RESUME DE L'INVENTION

Dans ce contexte, l'invention propose une alternative de réalisation permettant de simplifier la réalisation d'une pièce en matériau composite, par exemple un panneau multi-plis composites, renforcée par des nanotubes de manière à renforcer la cohésion des différentes couches composites lors des impacts.

A cette fin, l'invention concerne un procédé de fabrication d'une pièce composite renforcée par des nanotubes selon la revendication 1.

Outre les caractéristiques évoquées dans le paragraphe précédent, le procédé de fabrication selon l'invention peut présenter une ou plusieurs caractéristiques complémentaires parmi les suivantes:
- ledit au moins un pli composite intégrant des nanotubes présente une matrice thermoplastique et/ou des fibres thermoplastiques ;
- ledit au moins un pli composite intégrant des nanotubes est un voile de fibres thermoplastiques, lesdits nanotubes étant intégrés dans lesdites fibres thermoplastiques ;
- ledit voile de fibres thermoplastiques est un voile de fibres thermoplastiques non tissées ;
- le voile de fibres thermoplastiques présente un grammage compris entre 15 g/m2 et 100 g/m2 ;
- ledit au moins un pli composite intégrant des nanotubes intègre des nanotubes de carbone ;
- ladite étape d'empilement consiste à empiler une pluralité de plis composites de pré-imprégné et une pluralité de plis composites intégrant des nanotubes, chaque espace inter-plis entre deux plis composites de pré-imprégné recevant un pli composite intégrant des nanotubes ;
- ledit procédé comporte une étape de mise sous pression et sous des conditions de température de l'empilement de plis composites résultant de ladite étape d'empilement ;
- ledit procédé comporte une étape de fabrication dudit pli composite intégrant des nanotubes, ladite étape de fabrication comportant une sous-étape de mélange d'un polymère thermoplastique et de poudre de nanotubes ;
- ledit polymère thermoplastique est un polymère présentant un point de fusion compris entre 85°C et 148°C ;
- le polymère thermoplastique est un copolymère à base de polycaprolactame et de polyhexaméthylène adipamide ;
- le mélange, résultant de ladite sous-étape de mélange, présente un taux compris entre 1% et 10% en poudre de nanotubes, préférentiellement entre 3% et 4% ;
- ladite étape de fabrication dudit pli composite intégrant des nanotubes comporte :
   - une sous-étape d'extrusion dudit mélange résultant de ladite sous-étape de mélange au travers d'une filière dimensionnée pour obtenir des filaments de polymère thermoplastique chargés en nanotubes présentant un diamètre compris entre 30 et 70 micromètres.

L'invention et ses différentes applications seront mieux comprises à la lecture de la description qui suit et à l'examen des figures qui l'accompagnent.

### BREVE DESCRIPTION DES FIGURES

Les figures ne sont présentées qu'à titre indicatif et nullement limitatif de l'invention.
La figure 1 illustre un schéma synoptique illustrant les principales étapes du procédé de fabrication selon l'invention.
La figure 2 illustre une vue d'ensemble de l'étape de fabrication d'un voile de fibres thermoplastiques non tissées renforcé par des nanotubes lors de la deuxième étape du procédé de fabrication illustré à la figure 1.
La figure 3 illustre un exemple d'empilement de différents pré-imprégnés et de différents voiles de fibres thermoplastiques non tissées renforcés par des nanotubes réalisés lors de la troisième étape du procédé de fabrication illustré à la figure 1.

Sauf précision contraire, un même élément apparaissant sur des figures différentes présente une référence unique.

### DESCRIPTION DETAILLEE

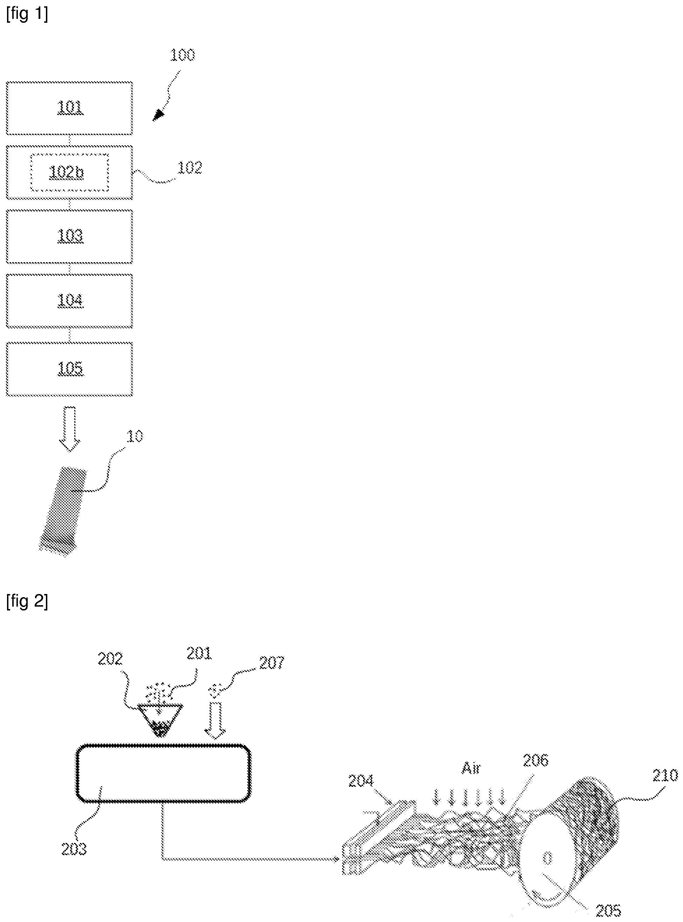

La [fig 1] illustre un schéma synoptique illustrant les principales étapes du procédé de fabrication 100 selon l'invention.

Le procédé de fabrication 100 selon l'invention permet de réaliser des pièces en matériaux composites présentant des caractéristiques améliorées concernant la tenue au phénomène de délaminage suite, par exemple, à un impact dans le sens transverse de la pièce (i.e perpendiculairement au sens des fibres de renfort.

Le procédé de fabrication 100 selon l'invention est avantageusement un procédé de fabrication d'une pièce composite 10 pour turbomachine. Toutefois, le procédé de fabrication 100 selon l'invention peut également trouver d'autres applications dans d'autres domaines techniques voisins, nécessitant la fabrication de pièces composites présentant une résistance améliorée aux impacts, notamment avec un coût de fabrication réduit.

Le procédé de fabrication 100 selon l'invention est plus particulièrement un procédé de fabrication d'une pièce en matériau composite 10 réalisée à partir d'une pluralité de plis de pré-imprégné 220.

Pour rappel, un pré-imprégné (prepreg en langue anglaise) est un produit semi-fini constitué d'une résine (appelée également matrice) thermodurcissable ou d'un polymère thermoplastique (également appelé résine thermoplastique) imprégnant un renfort constitué de fibres (tissé ou non). Ce composite est généralement fortement chargé en fibres de renfort et est destiné à un moulage à chaud sous pression pour la fabrication d'un produit fini qui est généralement constitué par l'association de plusieurs plis de pré-imprégné.

Une première étape 101 du procédé de fabrication 100 selon l'invention consiste à préparer une pluralité de plis de pré-imprégné 220 qui constitueront les différentes couches structurelles de la pièce composite finale 10.

Les différents plis de pré-imprégné 220 sont par exemple découpés à la forme désirée à partir d'un rouleau de pré-imprégné lorsque le conditionnement du pré-imprégné est réalisé en rouleau.

Le pré-imprégné est par exemple un pré-imprégné à base de fibres de carbone tissées et d'une matrice époxyde, ou d'une matrice PEAK (pour polyaryléthercétones).

Le choix des fibres de renfort, de la matrice, du tissage et de l'orientation des fibres est réalisé classiquement en fonction du type de pièce à réaliser ainsi que des contraintes subies par ladite pièce.

Une deuxième étape 102 du procédé de fabrication 100 selon l'invention consiste à préparer au moins un pli composite 210 composé d'une composante thermoplastique intégrant des nanotubes.

Le pli composite 210 à composante thermoplastique intégrant des nanotubes a pour rôle de réaliser un renfort d'interface, ou de cohésion, entre deux couches structurelles de la pièce composite finale 10 réalisées par deux plis de pré-imprégné 220 décrit précédemment.

Le pli composite « dopé » en nanotubes est par exemple un pli présentant une matrice thermoplastique incorporant des nanotubes.

Le pli composite dopé en nanotubes est par exemple un pli présentant des fibres thermoplastiques « dopées » aux nanotubes, i.e. que le pli incorpore des nanotubes dans l'enchevêtrement des fibres thermoplastiques.

Les nanotubes sont composés d'un ou de plusieurs feuillets d'atomes enroulés sur eux-mêmes de manière à former un tube. Les nanotubes peuvent être des nanotubes simple-feuillet (SWNT pour Single Walled NanoTubes en langue anglaise) ou des nanotubes multi-feuillets (MWNT pour Multi-Walled NanoTubes en langue anglaise).

Lorsque les nanotubes utilisés sont des nanotubes SWNT, ils présentent par exemple un diamètre de l'ordre de 2 nm et une longueur de l'ordre de 5 µm.

Lorsque les nanotubes utilisés sont des nanotubes MWNT, ils présentant par exemple un diamètre de l'ordre de 10 nm et une longueur de l'ordre de 2 µm.

A titre d'exemple, les nanotubes utilisés sont des nanotubes de carbone. Toutefois, d'autres types de nanotubes connus peuvent être utilisés en remplacement des nanotubes de carbone mentionnés dans la présente invention.

Selon un exemple de réalisation, le pli composite 210 intégrant des nanotubes est un voile (également appelé feutre ou encore mat) de fibres thermoplastiques, avantageusement non tissées. Le pli de voile de fibres thermoplastiques non tissées a pour rôle de réaliser un renfort d'interface, ou de cohésion, entre deux couches structurelles de la pièce composite finale 10 réalisées par deux plis de pré-imprégné 220.

Le pli de voile de fibres thermoplastiques non tissées est par exemple découpé à la forme désirée à partir d'un rouleau lorsque le conditionnement du voile de fibres thermoplastiques est réalisé en rouleau.

Le pli de voile de fibres thermoplastiques non tissées permet de simplifier le procédé de fabrication et les coûts de revient. Toutefois, il est également envisagé, dans certaines configurations d'utiliser, un pli de voile de fibres thermoplastiques tissées.

Cette deuxième étape 102 peut comporter, de façon optionnelle, une sous étape 102a de fabrication du pli composite intégrant des nanotubes, et plus particulièrement du voile de fibres thermoplastiques non tissées.

Le voile de fibres thermoplastiques non tissées est un type particulier de matériau formé par l'enchevêtrement de fibres thermoplastiques les unes aux autres sans tissage. Le maintien des fibres thermoplastiques entre elles est obtenu par un procédé thermique de fusion-soufflage permettant de s'affranchir de l'utilisation d'un liant chimique.

Le voile de fibres thermoplastiques non tissées de l'invention est un voile de fibres thermoplastique « dopées » aux nanotubes, i.e. que le voile incorpore des nanotubes dans l'enchevêtrement des fibres thermoplastiques.

Le voile de fibres thermoplastiques non tissées présente par exemple un grammage compris entre 15 g/m2 et 100 g/m2.

La [fig 2] illustre le principe de fabrication d'un voile de fibres thermoplastiques non tissées, « dopées » aux nanotubes, utilisé comme liant pour renforcer la tenue au délaminage des différentes couches structurelles de la pièce composite.

Dans un premier temps, on introduit via une trémie d'alimentation 202 des granulés 201, ou encore une poudre, de polymère thermoplastique dans un extrudeuse 203 présentant une vis sans fin pour la réalisation du mélange, l'extrudeuse 203 comportant différentes zones de chauffage pour diminuer la viscosité du mélange le long de la vis sans fin.

Dans un deuxième temps, on vient charger ce mélange avec une poudre de nanotubes 207. Le mélange est avantageusement chargé entre 1% et 10% de poudre de nanotubes 207 (par exemple de la poudre de nanotubes de carbone) de manière à obtenir un mélange présentant une viscosité adaptée pour le passage du mélange échauffé dans une filière 204. Préférentiellement, le mélange de polymère thermoplastique est chargé entre 3% et 4% de poudre de nanotubes 207 de carbone.

Dans un troisième temps, la vis sans fin malaxe, compresse, cisaille, échauffe et transporte, en continue, le mélange ainsi chargé vers la filière 204.

Dans un quatrième temps, le mélange chargé en nanotubes passe au travers de la filière 204 présentant une forme de grillage avec des ouvertures relativement fines de manière à former des filaments de polymère thermoplastique chargés en nanotubes de quelques dixièmes de millimètres de diamètre, par exemple entre 30 et 70 µm.

Dans un cinquième temps, par une opération de fusion et de soufflage on vient enchevêtrer et lier les différents filaments thermoplastiques chargés en nanotubes les uns aux autres.

Dans un sixième temps, on enroule les filaments 206 enchevêtrés et liés thermiquement autour d'un mandrin tournant 205 de manière à former un voile de fibres thermoplastiques non tissées chargées en nanotubes 210.

Le polymère thermoplastique utilisé pour la réalisation du voile de fibres thermoplastiques non tissées chargées en nanotubes 210 est un polymère à bas point de fusion allant de 85°C à 148°C, la température du point de fusion du polymère thermoplastique étant choisie en fonction de la matrice du pré-imprégné utilisée pour la réalisation de la pièce composite. A titre d'exemple, le polymère thermoplastique peut être un co-polyamide PA 6.6/6, à base de polycaprolactame (polyamide 6 (PA 6)) et de polyhexaméthylène adipamide (polyamide 6.6 (PA 6.6)), présentant un point de fusion de l'ordre de 106°C.

Une troisième étape 103 du procédé de fabrication 100 selon l'invention consiste à empiler, dans un outillage de forme, une pluralité de plis de pré-imprégné 220 avec au moins un pli composite intégrant des nanotubes 210, par exemple le voile de fibres thermoplastiques non tissées, ledit au moins un pli composite intégrant des nanotubes 210 étant positionné dans un espace inter-plis 221 entre deux plis de pré-imprégné 220.

Selon une variante de réalisation, l'empilement peut comporter plusieurs plis composites intégrant des nanotubes 210 entre deux plis de pré-imprégné 220.

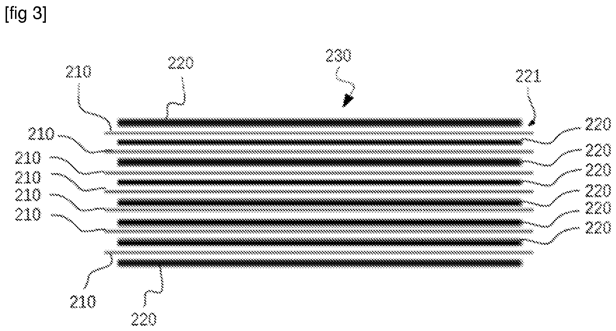

La [fig 3] illustre à cet effet un empilement 230 d'une pluralité de plis de pré-imprégné 220 et d'une pluralité de plis composites intégrant des nanotubes 210, un pli composite intégrant des nanotubes 210 étant positionné entre deux plis de pré-imprégné 220.

Selon une variante de réalisation, il est possible de positionner les plus composites intégrant des nanotubes 210 uniquement dans une région spécifique de l'empilement 230, par exemple au centre de l'empilement, dans une zone supérieure de l'empilement 230, dans une zone inférieure de l'empilement 230 ou encore dans une zone inférieure et une zone supérieure de l'empilement 230.

Avantageusement, les plis composites intégrant des nanotubes 210 seront placés, à minima, dans une région située à l'opposé (dans le sens de l'épaisseur) de la zone d'impact potentielle.

De manière à augmenter la densité des nanotubes entre deux plis de pré-imprégné 200, il est possible de positionner plusieurs plis composites intégrant des nanotubes de manière superposés dans un même espace inter-plis 221, avec des grammages, des compositions et/ou des tissages différents.

Une quatrième étape 104 du procédé de fabrication 100 selon l'invention consiste à mettre l'empilement 230 sous vide et sous pression et dans des conditions de température dans un autoclave de manière à réaliser la pièce composite finale 10. Les paramètres de cuissons sont classiquement les paramètres utilisés pour la réalisation d'une pièce composite à partir de pré-imprégnés.

Lors de la mise en pression et en température de l'empilement 230, le polymère thermoplastique des plis composites thermoplastiques intégrant les nanotubes 210 fond et les nanotubes se retrouvent directement en contact avec la résine des plis de pré-imprégné environnant. Sous les conditions de température et de pressions, les nanotubes se lient à la matrice environnante et viennent créer des liaisons physiques de renfort entre les différentes couches composites de l'empilement 230, améliorant ainsi la cohésion des différentes couches.

Une cinquième étape 105 du procédé de fabrication 100 selon l'invention consiste à démouler la pièce composite finale 10 de l'outillage de forme.

Grâce au procédé de fabrication 100 selon l'invention et à l'utilisation d'un pli de composite chargé en nanotubes, comme par exemple un voile de fibres thermoplastiques non tissées chargées en nanotubes, la répartition des nanotubes, leur inclinaison par rapport aux plis de pré-imprégné est aléatoire ce qui permet de garantir une bonne intégration ainsi qu'une bonne cohésion entre les différentes couches composite de la pièce finale quelle que soit l'orientation et quel que soit le type d'impacts subis par la pièce composite finale 10.

L'invention permet ainsi de renforcer efficacement, et de manière simple et rapide, l'interface des plis de pré-imprégné par l'ajout d'un pli composite de fibres thermoplastiques chargées en nanotubes, par exemple de carbone, dont le process de fabrication est simple et maitrisé.

## Revendications

1. Procédé de fabrication (200) d'une pièce composite renforcée par des nanotubes (10), ledit procédé comportant une étape d'empilement (103) consistant à empiler une pluralité de plis composites de pré-imprégné (220) et au moins un pli composite intégrant des nanotubes (210), ledit au moins un pli composite intégrant des nanotubes (210) étant positionné dans un espace inter-plis (221) entre deux plis composites de pré-imprégné (220), dans lequel ledit au moins un pli composite intégrant des nanotubes (210) est un pli présentant une composante thermoplastique, lesdits nanotubes étant intégrés dans ladite composante thermoplastique, ledit procédé de fabrication comprenant une étape de fabrication (102b) dudit pli composite intégrant des nanotubes comportant :
- une sous-étape d'extrusion d'un mélange, résultant d'une sous-étape de mélange, au travers d'une filière dimensionnée pour obtenir des filaments de polymère thermoplastique chargés en nanotubes ; ledit procédé de fabrication (200) étant **caractérisé en ce que** ladite étape de fabrication (102b) dudit pli composite comporte en outre une sous-étape de fusion et de soufflage desdits filaments de polymère thermoplastique chargés en nanotubes et sans liant chimique.

2. Procédé de fabrication (200) d'une pièce composite renforcée par des nanotubes (10) selon la revendication 1, **caractérisé en ce que** ledit au moins un pli composite intégrant des nanotubes présente une matrice thermoplastique et/ou des fibres thermoplastiques.

3. Procédé de fabrication (200) d'une pièce composite renforcée par des nanotubes (10) selon l'une des revendications 1 à 2, **caractérisé en ce que** ledit au moins un pli composite intégrant des nanotubes (210) est un voile de fibres thermoplastiques, lesdits nanotubes étant intégrés dans lesdites fibres thermoplastiques.

4. Procédé de fabrication (200) d'une pièce composite renforcée par des nanotubes (10) selon la revendication 3, **caractérisé en ce que** ledit voile de fibres thermoplastiques est un voile de fibres thermoplastiques non tissées.

5. Procédé de fabrication (200) d'une pièce composite renforcée par des nanotubes (10) selon l'une des revendications 3 à 4, **caractérisé en ce que** le voile de fibres thermoplastiques présente un grammage compris entre 15 g/m2 et 100 g/m2.

6. Procédé de fabrication (200) d'une pièce composite renforcée par des nanotubes (10) selon l'une des revendications 1 à 5, **caractérisé en ce que** ledit au moins un pli composite intégrant des nanotubes (210) intègre des nanotubes de carbone.

7. Procédé de fabrication (200) d'une pièce composite renforcée par des nanotubes (10) selon l'une des revendications 1 à 6, **caractérisé en ce que** ladite étape d'empilement (103) consiste à empiler une pluralité de plis composites de pré-imprégné (220) et une pluralité de plis composites intégrant des nanotubes (210), chaque espace inter-plis (221) entre deux plis composites de pré-imprégné (220) recevant un pli composite intégrant des nanotubes.

8. Procédé de fabrication (200) d'une pièce composite renforcée par des nanotubes (10) selon l'une des revendications 1 à 7, **caractérisé en ce que** ledit procédé comporte une étape (104) de mise sous pression et sous des conditions de température de l'empilement de plis composites résultant de ladite étape d'empilement (103).

9. Procédé de fabrication (200) d'une pièce composite renforcée par des nanotubes (10) selon l'une des revendications 1 à 8, **caractérisé en ce que** ledit procédé comporte une étape de fabrication (102b) dudit pli composite intégrant des nanotubes, ladite étape de fabrication comportant une sous-étape de mélange d'un polymère thermoplastique et de poudre de nanotubes.

10. Procédé de fabrication (200) d'une pièce composite renforcée par des nanotubes (10) selon la revendication 9, **caractérisé en ce que** le polymère thermoplastique est un polymère présentant un point de fusion compris entre 85°C et 148°C.

11. Procédé de fabrication (200) d'une pièce composite renforcée par des nanotubes (10) selon l'une des revendications 9 à 10, **caractérisé en ce que** le polymère thermoplastique est un copolymère à base de polycaprolactame et de polyhexaméthylène adipamide.

12. Procédé de fabrication (200) d'une pièce composite renforcée par des nanotubes (10) selon l'un des revendications 9 à 11, **caractérisé en ce que** le mélange résultant de ladite sous-étape de mélange présente un taux compris entre 1% et 10% en poudre de nanotubes, préférentiellement entre 3% et 4%.

13. Procédé de fabrication (200) d'une pièce composite renforcée par des nanotubes (10) selon l'une des revendications 1 à 12 **caractérisé en ce que** les filaments de polymère thermoplastique chargés en nanotubes présentent un diamètre compris entre 30 et 70 micromètres.

## Patentansprüche

1. Verfahren (200) zur Herstellung eines mit Nanoröhren (10) verstärkten Verbundwerkstoffteils, wobei das Verfahren einen Stapelschritt (103) umfasst, der darin besteht, eine Vielzahl von Prepreg-Verbundlagen (220) und mindestens eine Nanoröhren (210) enthaltende Verbundlage zu stapeln, wobei die mindestens eine Nanoröhrchen (210) enthaltende Verbundlage in einem Zwischenraum (221) zwischen zwei Prepreg-Verbundlagen (220) positioniert wird, wobei
die mindestens eine Nanoröhren (210) enthaltende Verbundlage eine Lage mit einer thermoplastischen Komponente ist, wobei die Nanoröhren in die thermoplastische Komponente eingebettet sind und das Herstellungsverfahren einen Herstellungsschritt (102b) der nanoröhrenhaltigen Verbundlage umfasst, der
- einen Teilschritt des Extrudierens einer Mischung umfasst, die aus einem Teilschritt des Mischens resultiert, durch eine Düse, die so dimensioniert ist, dass thermoplastische Polymerfilamente erhalten werden, die mit Nanoröhren gefüllt sind;
wobei das Herstellungsverfahren (200) **dadurch gekennzeichnet ist, dass** der Herstellungsschritt (102b) der Verbundlage ferner einen Teilschritt des Schmelzens und Blasens der mit Nanoröhren gefüllten thermoplastischen Polymerfilamente ohne chemisches Bindemittel umfasst.

2. Verfahren (200) zur Herstellung eines mit Nanoröhren (10) verstärkten Verbundwerkstoffteils nach Anspruch 1, **dadurch gekennzeichnet, dass** die mindestens eine Nanoröhren enthaltende Verbundlage eine thermoplastische Matrix und/oder thermoplastische Fasern aufweist.

3. Verfahren (200) zur Herstellung eines mit Nanoröhren (10) verstärkten Verbundwerkstoffteils nach einem der Ansprüche 1 bis 2, **dadurch gekennzeichnet, dass** die mindestens eine Verbundlage, die Nanoröhren (210) enthält, ein Vlies aus thermoplastischen Fasern ist, wobei die Nanoröhren in die thermoplastischen Fasern eingebettet sind.

4. Verfahren (200) zur Herstellung eines mit Nanoröhren (10) verstärkten Verbundwerkstoffteils nach Anspruch 3, **dadurch gekennzeichnet, dass** das thermoplastische Faservlies ein Vlies aus nichtgewebten thermoplastischen Fasern ist.

5. Verfahren (200) zur Herstellung eines mit Nanoröhren (10) verstärkten Verbundwerkstoffteils nach einem der Ansprüche 3 bis 4, **dadurch gekennzeichnet, dass** das thermoplastische Faservlies ein Flächengewicht zwischen 15 g/m² und 100 g/m² aufweist.

6. Verfahren (200) zur Herstellung eines mit Nanoröhren (10) verstärkten Verbundwerkstoffteils nach einem der Ansprüche 1 bis 5, **dadurch gekennzeichnet, dass** die mindestens eine Verbundlage (210), die Nanoröhren enthält, Kohlenstoffnanoröhren enthält.

7. Verfahren (200) zur Herstellung eines mit Nanoröhren (10) verstärkten Verbundwerkstoffteils nach einem der Ansprüche 1 bis 6, **dadurch gekennzeichnet, dass** der Schritt des Stapelns (103) darin besteht, eine Vielzahl von Prepreg-Verbundlagen (220) und eine Vielzahl von Nanoröhren enthaltenden Verbundlagen (210) zu stapeln, wobei jeder Zwischenraum (221) zwischen zwei Prepreg-Verbundlagen (220) eine Nanoröhren enthaltende Verbundlage aufnimmt.

8. Verfahren (200) zur Herstellung eines mit Nanoröhren (10) verstärkten Verbundwerkstoffteils nach einem der Ansprüche 1 bis 7, **dadurch gekennzeichnet, dass** das Verfahren einen Schritt (104) umfasst, bei dem der aus dem Stapelschritt (103) resultierende Stapel von Verbundlagen unter Druck und unter bestimmten Temperaturbedingungen gesetzt wird.

9. Verfahren (200) zur Herstellung eines mit Nanoröhren (10) verstärkten Verbundwerkstoffteils nach einem der Ansprüche 1 bis 8, **dadurch gekennzeichnet, dass** das Verfahren einen Herstellungsschritt (102b) der Nanoröhren enthaltenden Verbundlage umfasst, wobei der Herstellungsschritt einen Teilschritt des Mischens eines thermoplastischen Polymers und von Nanoröhrenpulver umfasst.

10. Verfahren (200) zur Herstellung eines mit Nanoröhren (10) verstärkten Verbundwerkstoffteils nach Anspruch 9, **dadurch gekennzeichnet, dass** das thermoplastische Polymer ein Polymer mit einem Schmelzpunkt zwischen 85°C und 148°C ist.

11. Verfahren (200) zur Herstellung eines mit Nanoröhren (10) verstärkten Verbundwerkstoffteils nach einem der Ansprüche 9 bis 10, **dadurch gekennzeichnet, dass** das thermoplastische Polymer ein Copolymer auf Basis von Polycaprolactam und Polyhexamethylenadipamid ist.

12. Verfahren (200) zur Herstellung eines mit Nanoröhren (10) verstärkten Verbundwerkstoffteils nach einem der Ansprüche 9 bis 11, **dadurch gekennzeichnet, dass** die aus dem Mischschritt resultierende Mischung einen Anteil an Nanoröhrenpulver zwischen 1 % und 10 %, vorzugsweise zwischen 3 % und 4 %, aufweist.

13. Verfahren (200) zur Herstellung eines mit Nanoröhren (10) verstärkten Verbundwerkstoffteils nach einem der Ansprüche 1 bis 12, **dadurch gekennzeichnet, dass** die mit Nanoröhren verstärkten thermoplastischen Polymerfilamente einen Durchmesser zwischen 30 und 70 Mikrometern aufweisen.

## Claims

1. Method for manufacturing (200) a composite part reinforced with nanotubes (10), said method comprising a stacking step (103) consisting in stacking a plurality of composite plies of prepreg (220) and at least one composite ply integrating nanotubes (210), said at least one composite ply integrating nanotubes (210) being positioned in an inter-ply space (221) between two composite plies of prepreg (220), wherein said at least one composite ply integrating nanotubes (210) is a ply having a thermoplastic component, said nanotubes being integrated in said thermoplastic component, said method for manufacturing comprising a step of manufacturing (102b) said composite ply integrating nanotubes comprising:
- a sub-step of extruding of a mixture, resulting from a mixing sub-step through a die dimensioned to obtain filaments of thermoplastic polymer filled with nanotubes;
- said method of manufacturing **characterised in that** said step of manufacturing (102b) of said composite ply also enclosed a sub-step of melting and blow forming said filaments of thermoplastic polymer filled with nanotubes.

2. Method for manufacturing (200) a composite part reinforced with nanotubes (10) according to claim 1, **characterised in that** said at least one composite ply integrating nanotubes has a thermoplastic matrix and/or thermoplastic fibres.

3. Method for manufacturing (200) a composite part reinforced with nanotubes (10) according to one of claims 1 to 2, **characterised in that** said at least one composite ply integrating nanotubes (210) is a web of thermoplastic fibres, said nanotubes being integrated in said thermoplastic fibres.

4. Method for manufacturing (200) a composite part reinforced with nanotubes (10) according to claim 3, **characterised in that** said web of thermoplastic fibres is a web of non-woven thermoplastic fibres.

5. Method for manufacturing (200) a composite part reinforced with nanotubes (10) according to one of claims 3 to 4, **characterised in that** the web of thermoplastic fibres has a weight per unit area comprised between 15 g/m² and 100 g/m².

6. Method for manufacturing (200) a composite part reinforced with nanotubes (10) according to one of claims 1 to 5, **characterised in that** said at least one composite ply integrating nanotubes (210) integrates carbon nanotubes.

7. Method for manufacturing (200) a composite part reinforced with nanotubes (10) according to one of claims 1 to 6, **characterised in that** said stacking step (103) consists in stacking a plurality of composite plies of prepreg (220) and a plurality of composite plies integrating nanotubes (210), each inter-ply space (221) between two composite plies of prepreg (220) receiving a composite ply integrating nanotubes.

8. Method for manufacturing (200) a composite part reinforced with nanotubes (10) according to one of claims 1 to 7, **characterised in that** said method comprises a step (104) of pressurising and placing under temperature conditions the stack of composite plies resulting from said stacking step (103).

9. Method for manufacturing (200) a composite part reinforced with nanotubes (10) according to one of claims 1 to 8, **characterised in that** said method comprises a step of manufacturing (102b) said composite ply integrating nanotubes, said step of manufacturing comprising a sub-step of mixing a thermoplastic polymer and nanotube powder.

10. Method for manufacturing (200) a composite part reinforced with nanotubes (10) according to claim 9, **characterised in that** the thermoplastic polymer is a polymer having a melting point comprised between 85°C and 148°C.

11. Method for manufacturing (200) a composite part reinforced with nanotubes (10) according to one of claims 9 to 10, **characterised in that** the thermoplastic polymer is a copolymer based on polycaprolactam and polyhexamethylene adipamide.

12. Method for manufacturing (200) a composite part reinforced with nanotubes (10) according to one of claims 9 to 11, **characterised in that** the mixture resulting from said mixing sub-step has a level of nanotube powder comprised between 1% and 10%, preferentially between 3% and 4%.

13. Method for manufacturing (200) a composite part reinforced with nanotubes (10) according to one of claims 1 to 12 **characterised in that** the filaments of thermoplastic polymer filled with nanotubes have a diameter comprised between 30 and 70 micrometres.
